# EUROPEAN PATENT APPLICATION

(11) **EP 2 086 220 A1**
(43) Date of publication of application: **05.08.2009**
(21) Application number: 07829196.0
(22) Date of filing: 04.10.2007
(51) Int. Cl.: H04N 5/225, H04N 5/232, H04N 5/76, H04N 5/765, H04N 5/91

(54) **IMAGING DEVICE, IMAGE REPRODUCING DEVICE, IMAGE PRINTING DEVICE, IMAGING DEVICE CONTROL METHOD, IMAGE CORRECTING METHOD FOR IMAGE REPRODUCING DEVICE, AND IMAGE CORRECTING METHOD FOR IMAGE PRINTING DEVICE**

(30) Priority: 06.10.2006 JP 2006274812
(71) Applicant: Sharp Kabushiki Kaisha, Osaka-shi, Osaka 545-8522 (JP)
(72) Inventor: ODA, Mamoru, Osaka-shi, Osaka 545-8522 (JP); NISHIGAKI, Tomoo, Osaka-shi, Osaka 545-8522 (JP)
(74) Representative: Treeby, Philip David William
(86) International application number: PCT/JP2007/069458
(87) International publication number: WO 2008/044591

(57) **Abstract**

Conventionally, there has been a problem that when an imaging device performs aberration correction by itself, the imaging device requires high processing ability and a large storage capacity and a problem that since the object subjected to aberration correction is image data read from an analog film by means of a scanner or the like, a region on an analog film from which the gray scale is lost is corrected as the gray scale is lost. To solve the problems, the present invention provides an imaging device in which the image captured by a digital imaging device and information for aberration correction embedded in the image as tag data of the Exif format are transmitted to an image reproducing device and aberration correction is performed in the image reproducing device. Specifically, the imaging device includes an imaging section for capturing an image, a holding section for holding aberration information representing the aberrations of the lens of the imaging section, and a transmitting section for transmitting the held aberration information to the captured image reproducing device.

## Description

### BACKGRAOUND OF THE INVENTION

### Field of the Invention

The present invention relates to a technology for efficiently correcting aberrations that occur in a picture due to a lens of an imaging apparatus.

### Description of the Related Art

An imaging apparatus with lens has a problem of 'aberration'. The 'aberration' corresponds to blurring, distortion, or bleeding of an imaged picture. The object light, which has passed through a lens and has been reflected, is not accurately focused to a point due to a property of the lens such as its radius or curved-surface, thereby causing the aberration. Examples of the aberration include spherical aberration, coma aberration, astigmatism, field curvature, distortion aberration, axial chromatic aberration, or chromatic aberration of magnification.

Conventionally, various technologies for correcting such aberrations occurring in the image picture have been suggested. For example, a technology for correcting an aberration of an imaged picture according to a property of the lens of the imaging apparatus has been provided. In addition, Japanese Unexamined Patent Application Publication No. H05-158134 discloses a technology, in which information for aberration correction such as a lens property is magnetically recorded on a silver salt film in the imaging apparatus, and the information for aberration correction is loaded simultaneously while loading the imaged picture by a recording apparatus, thereby carrying out the correction processing.

### Reference: Japanese Unexamined Patent Application Publication No. H05-158134

### SUMMARY OF THE INVENTION

However, the above conventional technology has the following deficiencies. When the imaging apparatus carries out the aberration correction by itself, it is required for the imaging apparatus to have high processing capability. In addition, excess capacity of a recording medium in the imaging apparatus is limited due to the necessity of recording data obtained by the imaging apparatus itself. Therefore, there is a deficiency that, for example, it is difficult to carry out advanced correction by utilizing large volumes of correction data such as 'correction coefficient table on a pixel basis'.

In addition, difference in reproducibility due to difference in performance or property of reproducing/printing circuit exists with respect to each reproducing apparatus or printing apparatus. However, when carrying out the aberration correction in the imaging apparatus, the differences associated with each apparatus are not considered, so that there is a possibility that the reproduced picture or printed picture, which is to be finally provided to a user, is not appropriately corrected.

In addition, in Japanese Unexamined Patent Application Publication No. H05-158134, an object of the aberration correction is picture data scanned from an analog film by a scanner, or the like. Therefore, for example, if the tone in a portion of the analog film has been lost, and the correction process for scanned picture is carried out on the portion, the tone remains lost.

In order to solve the above deficiencies, for example, the present invention provides an imaging apparatus, in which the information for aberration correction provided as tag data in Exif is embedded into the picture imaged by the digital image sensor such as CCD or CMOS, and the picture is transmitted to the picture reproducing apparatus or the picture printing apparatus, thereby carrying out the aberration processing in the picture reproducing apparatus or the picture printing apparatus. Specifically, the imaging apparatus comprises an imaging unit for imaging a picture, a storage unit for storing aberration information, which indicates an aberration of a lens of the imaging unit, and a transmission unit for transmitting the stored aberration information to a reproducing apparatus for an imaged picture. Moreover, the imaging apparatus transmits the aberration information to the printing apparatus, not to the reproducing apparatus.

In addition, the present invention further provides a picture reproducing apparatus or a picture printing apparatus, which has a high processing ability such as hard disk drive (HDD) recorder, that can store a large volume of aberration data, and comprises an acquisition unit for aberration information, which acquires aberration information from the imaging apparatus, and a correction unit, which carries out correction of the picture acquired from said imaging apparatus based on the acquired aberration information.

According to the above configuration of the present invention, it is possible to cause the picture reproducing apparatus or the picture printing apparatus to execute the aberration correction processing, so that it is unnecessary to provide the high processing ability or the large amount of storage with the imaging apparatus itself. Moreover, it is possible to cause a picture reproducing apparatus, which can easily have a large-capacity storage media such as a HDD, to store the aberration data having a large volume of data, thereby carrying out advanced aberration correction processing. Furthermore, it is possible to appropriately correct the reproduced picture or the printed picture, which is to be finally provided to a user, according to property of circuit of the picture reproducing apparatus or the printing apparatus.

Moreover, the picture data as a target of the aberration correction is imaged by the digital image sensor such as CCD or CMOS, so that, as to the portion, whose brightness has decreased due to the aberration, it is possible to store the tone acquirable by the imaging sensor. Therefore, it is possible to carry out the aberration correction of the portion having the tone deficiency, differently from the digital picture data, which has been scanned from the analog film and A/D-converted.

### BRIEF DESCRIPTION OF THE DRAWINGS

Fig. 1 is a conceptual diagram showing an example of aberration correction of a picture imaged by an imaging apparatus (a camera) of a first embodiment.
Fig. 2 is a functional block diagram showing an example of the imaging apparatus of the first embodiment.
Fig. 3 is a functional block diagram showing another example of the imaging apparatus of the first embodiment.
Fig. 4 is a conceptual diagram showing an example of aberration information stored by storage means for aberration information of the imaging apparatus of the first embodiment.
Fig. 5 is a functional block diagram showing another example of the imaging apparatus of the first embodiment.
Fig. 6 is a schematic diagram showing an example of hardware configuration of the imaging apparatus of the first embodiment.
Fig. 7 is a flowchart of processing in the imaging apparatus of the first embodiment.
Fig. 8 is a schematic diagram showing an example of aberration correction of a picture imaged by an imaging apparatus (a camera) of a second embodiment.
Fig. 9 is a functional block diagram showing an example of the imaging apparatus of the second embodiment.
Fig. 10 is a conceptual diagram showing an example of acquisition processing of identification information of remaining correction and transmission processing of the identification information of remaining correction correlated with picture.
Fig. 11 is a diagram showing an example of tag data of the picture transmitted from transmission means for identification information of remaining correction.
Fig. 12 is a schematic diagram showing an example of hardware configuration of the imaging apparatus of the second embodiment.
Fig. 13 is a flowchart of processing in the imaging apparatus of the second embodiment.
Fig. 14 is a functional block diagram showing another example of the picture reproducing apparatus of a third embodiment.
Fig. 15 is a conceptual diagram showing an example of correction data used for correction processing in a correction unit of the picture reproducing apparatus of the third embodiment.
Fig. 16 is a schematic diagram showing an example of hardware configuration of the picture reproducing apparatus of the third embodiment.
Fig. 17 is a flowchart of processing in the picture reproducing apparatus of the third embodiment.
Fig. 18 is a functional block diagram showing another example of the picture reproducing apparatus of a fourth embodiment.
Fig. 19 is a schematic diagram showing an example of hardware configuration of the picture reproducing apparatus of a fourth embodiment.
Fig. 20 is a flowchart of processing in the picture reproducing apparatus of the fourth embodiment.

### DETAILED DESCRIPTION OF THE INVENTION

Embodiments of the present invention will be described hereinbelow with reference to the drawings. The present invention is not to be limited to the disclosed embodiments and can be embodied in various forms without departing from the scope thereof.

### <<First embodiment>>

### <Concept of First Embodiment>

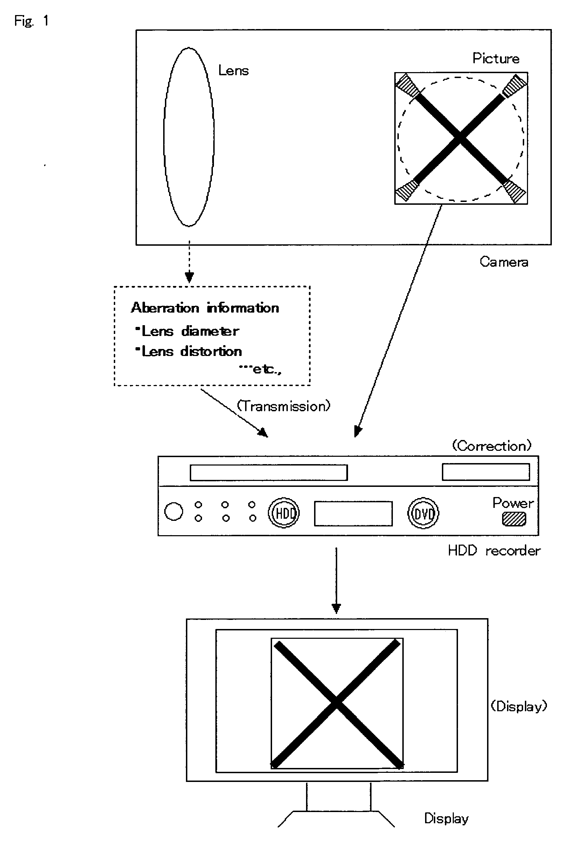

Fig. 1 is a conceptual diagram showing an example of aberration correction of a picture imaged by an imaging apparatus (a camera) of a first embodiment. As shown in Fig. 1, as to the picture of the character 'X' imaged by the imaging apparatus, there is distortion or blurring in the peripheral portion of the picture due to the distortion aberration and spherical aberration of the lens indicated by a perforated line. Therefore, when transmitting the picture to a HDD recorder, which is a recording/reproducing apparatus for the picture, the imaging apparatus of the first embodiment transmits the information of the lens property such as 'radius of the lens' or 'curvature of the lens' with the picture to the HDD recorder via infrared communication, or the like.

Therefore, in the HDD recorder, the aberration correction processing suitable for the imaging apparatus is carried out by utilizing the transmitted data such as 'radius of the lens' or 'curvature of the lens', and for example, the picture is displayed on a display in a state where its aberration is corrected according to the property of the reproducing circuit of the reproducing apparatus.

### <Functional Configuration>

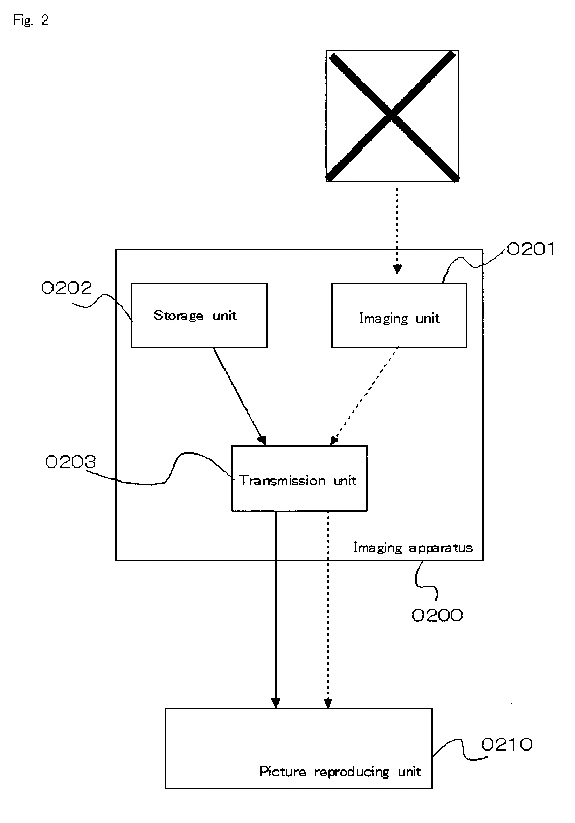

Fig. 2 is a functional block diagram showing an example of the imaging apparatus of the first embodiment. As shown in Fig. 2, the imaging apparatus of the first embodiment includes an 'imaging unit' (0201), a 'storage unit' (0202), and a 'transmission unit' (0203).

Note that, the functional block for the imaging apparatus or after-mentioned picture reproducing apparatus/picture printing apparatus can be implemented by hardware, software, or both hardware and software. Specifically, in the case of using a computer, examples of them include hardware components comprising a CPU, a main memory, a bus, a secondary storage device (e.g., a hard disk or a nonvolatile memory, a storage media such as CD-ROM or DVD-ROM, or a reading drive for the above media), printing device, display device, other peripheral devices, and I/O ports for the other peripheral devices, and a driver program for controlling the above hardware, other application programs, and a user interface for inputting information. The above hard and software are used for sequential execution of programs operated on the main memory by CPU, for processing, storing and outputting of the data inputted via the interface, or for controlling the respective hardware components. Moreover, the present invention can be implemented not only as an apparatus but also as a method thereof. Moreover, a portion of the invention may be configured as software. Furthermore, a software product used for causing a computer to execute the software, and the recording medium, in which the software is installed, should be included in the technical scope of the present invention (the same applies throughout the entire specification).

The 'imaging unit' (0201) has a function of imaging a picture. Therefore, the imaging unit can be implemented by the same configuration as that of a normal camera such as a lens or a lens system (a combination of a plurality of lenses), a driving circuit for the lens, an imaging sensor such as a CCD or a CMOS, or an A/D converter, and a frame memory. Note that, this imaging unit does not include an imaging mechanism for silver-salt film using chemicals.

As described above, there is a problem in the picture imaged by this imaging unit that the object light is not accurately focused by the lens (system) to one point due to the major diameter of the lens or distortion rate, thereby causing blurring, distortion, or bleeding. In order to correct the aberration such as the blurring, distortion, or bleeding of the image picture, the imaging apparatus of the present invention transmits the information such as 'major diameter of the lens' or 'curvature of the lens', which can be used as a parameter for the aberration correction, to the external apparatus.

The 'storage unit' has a function of storing aberration information, which indicates an aberration of a lens of the imaging unit. The 'aberration information' corresponds to information indicating aberration of the lens of the imaging unit (0201), and examples thereof include a distortion rate on a picture and a difference value from an original brightness value.

In addition, this aberration is dependent on the lens property, so that the aberration can be acquired from the lens property. Therefore, the storage unit may store the information indicating such lens property.

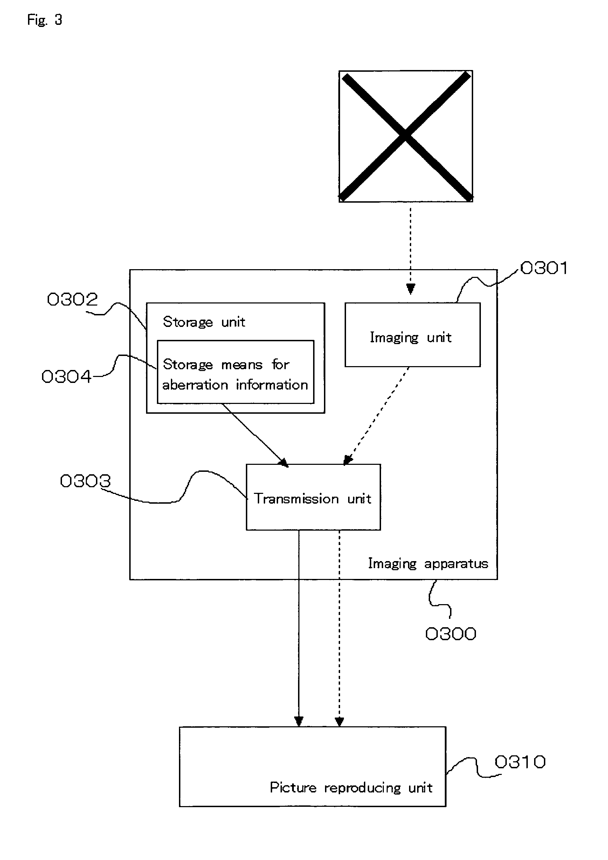

Fig. 3 is a functional block diagram showing another example of the imaging apparatus of the first embodiment in cases where the storage unit stores the information indicating the lens property usable for determining the aberration thereof as the aberration information. As shown in Fig. 3, the 'storage unit' (0302) may comprise a 'storage means for aberration information' (0304).

The 'storage means for aberration information' has a function of storing one or more than one of a physical constant of a lens system, identification information of the lens system, identification information of the imaging unit, or identification information of the imaging apparatus itself. Examples of the 'physical constant of a lens system' include major diameter of a lens, distortion rate, maximum thickness, and transmission rate. Note that, this physical constant may be the value of each lens or a value of a combination of a plurality of lenses in a lens system. In addition, in the case of a plurality of lens systems such as a lens system for shooting a stereoscopic image, the physical constant may be a value of each lens system or a value of a combination thereof. In addition, in the case of a configuration, in which imaging is carried out by switching a plurality of lenses (lens systems) for shooting, a lens (lens system) actually used for the shooting may be specified and stored.

The 'identification information of the lens system' corresponds to information for identifying a lens or a lens system. Examples of the information include a name of the lens or a name of the lens system, model number, or production code. The 'identification information of the imaging unit' corresponds to identification information of imaging components excluding a lens system, for example, an imaging sensor such as a CCD (Charge-Coupled Device) or CMOS (Complementary Metal-Oxide Semiconductor), A/D converter (Analog/Digital converter). According to such identification information of the imaging components, for example, it is possible to acquire a value of photoelectric conversion rate of the imaging sensor, and to use it for correcting aberrations. The 'identification information of the imaging apparatus itself corresponds, for example, to a model name, a model number, a production code of a camera.

The above identification information of the lens system such as a model number of the lens or camera, the identification information of the imaging unit, or the identification information of the imaging apparatus itself cannot be used for calculating the aberration nor be used as a correction parameter. However, as described below, the picture reproducing apparatus or the picture printing apparatus acquires the physical constant of the lens system via communication by utilizing this identification information as a key, so that it is possible to calculate the aberration and to use the physical constant as a correction parameter.

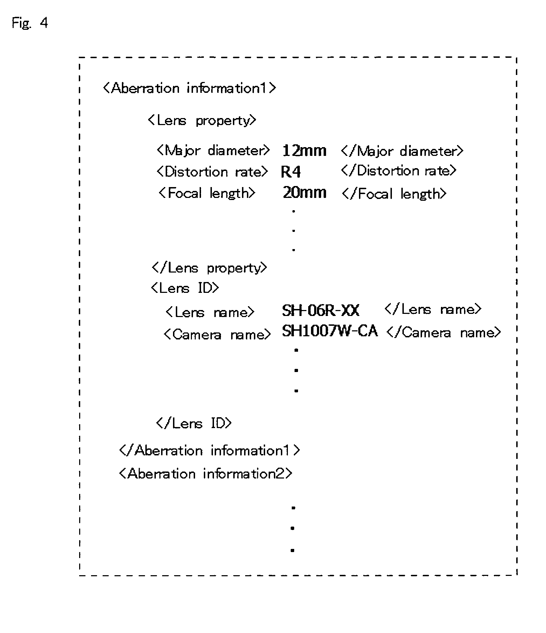

Fig. 4 is a diagram showing an example of aberration information stored by storage means for aberration information of the imaging apparatus of the first embodiment. As show in Fig. 4, the aberration information includes, for example, information as 'major diameter 12mm', 'curvature R45', and 'focal length 20mm' as the physical constant indicating the 'lens property'. These physical constant of the lens system can be utilized as parameters for the after-mentioned aberration correction. Similarly, as shown in Fig. 4, the aberration information may be, for example, information of the model number of the lens or the camera such as 'lens name SH-06R-XX', or 'camera name SH-1007W-CA'.

Note that as to the aberration information stored in the storage unit, the aberration information may be preliminarily recorded and stored as a value unique to the imaging apparatus, or in cases where the imaging apparatus is a single-lens reflex camera and can change its lens tube, the aberration information of the lens tube may be newly stored upon mounting the lens tube. In this case, the lens tube stores its aberration information, and when the lens tube has contact with the imaging apparatus upon being mounted, the aberration information is transmitted to the imaging apparatus.

In addition, the aberration information may be utilized, for example, in cases where a plurality of imaged pictures are synthesized for generating one picture in order to reduce image blurring.

The 'transmission unit' (0203) has a function of transmitting the stored aberration information to a reproducing apparatus for the imaged picture, and can be implemented through the infrared communication circuit and other wireless communication circuit, or wired communication circuit. Thus, the imaging apparatus of the first embodiment can transmit the aberration information to the picture reproducing apparatus having high processing ability or high data storage capacity, thereby carrying out advanced aberration correction in comparison with that carried out by the imaging apparatus itself.

In addition, the aberration information may be embedded into the picture as tag data and may be transmitted with the picture to the imaging apparatus.

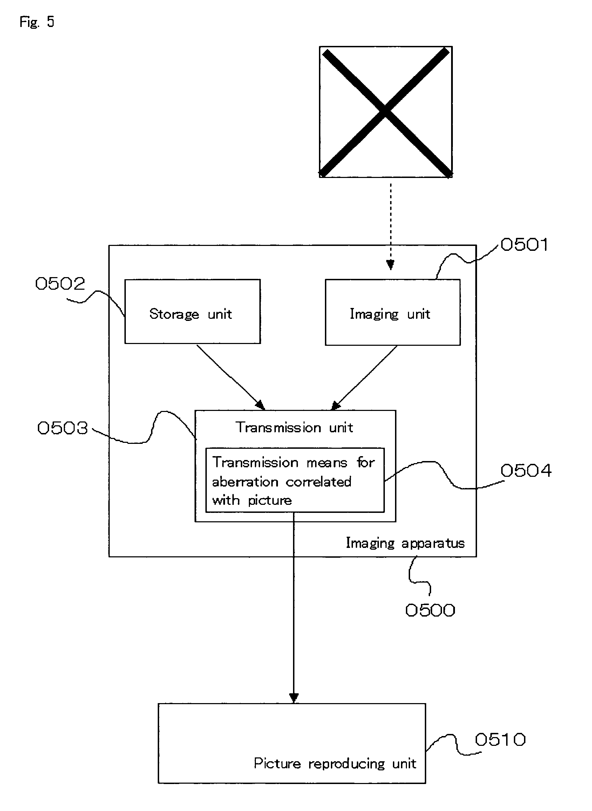

Fig. 5 is a functional block diagram showing an example of the imaging apparatus of the first embodiment in cases where the transmission unit transmits the aberration information with the picture as described above. As shown in Fig. 5, the 'transmission unit' (0503) of the imaging apparatus of the first embodiment may comprise the 'transmission means for aberration correlated with picture' (0504). The 'transmission means for aberration correlated with picture' (0504) has a function of transmitting the aberration information correlated with the imaged picture. As to the 'method for correlation with the imaged picture', for example, the correlation is carried out by adding tag data in Exif (Exchangeable Image File Format) to the picture data, or by adding the same correlation key to the picture and the aberration information, respectively.

The picture reproducing apparatus can utilize its high processing ability or high data storage capacity, thereby carrying out advanced correction to such acquired picture by means of advanced correction function or a correction table based on the aberration information.

Moreover, it is possible to carry out correction, so that the aberration in a reproduced picture to be finally provided to a user is appropriately corrected according to the circuit property of the apparatus.

In addition, the picture data transmitted as a target of the aberration correction is imaged by the digital imaging sensor such as CCD or CMOS, and for example, the portion, in which brightness has decreased due to the aberration, still retains its tone acquirable for the imaging sensor, so that it is possible to carry out aberration correction with high reproducibility.

Note that the transmission unit may transmit the aberration information to the printing apparatus rather than to the reproducing apparatus. In cases where the transmission destination of the picture is the picture printing apparatus, and the aberration correction is carried out by the picture printing apparatus, similar to the above, it is possible to utilize high processing ability or high data storage capacity, thereby carrying out advanced correction to such acquired picture by means of advanced correction function or a correction table based on the aberration information. Moreover, it is possible to carry out correction, so that the aberration in a printed picture to be finally provided to a user is appropriately corrected according to the circuit property of the apparatus.

### <Hardware Configuration>

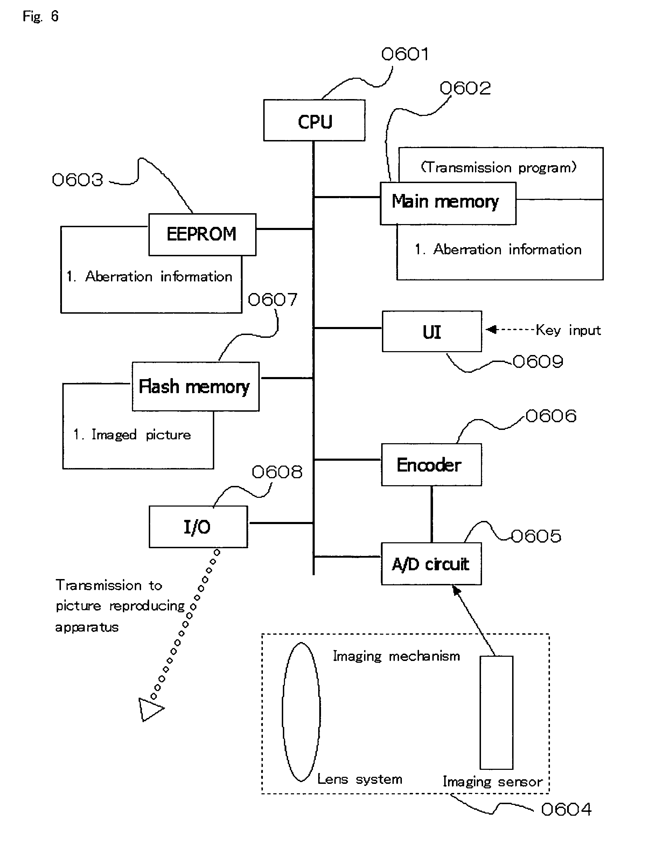

Fig. 6 is a schematic diagram showing an example of hardware configuration of the imaging apparatus of the first embodiment in cases where the above-mentioned functional configuration is implemented as hardware. The processing of the respective hardware components in transmission of the aberration information to the picture reproducing apparatus will be described with reference to Fig. 6. As shown in Fig. 6, the imaging apparatus comprises a 'CPU (Central Processing Unit)' (0601) for various calculations, and a 'main memory' (0602). In addition, a 'EEPROM' (0603) as the storage unit, an 'imaging mechanism' (0604), an 'A/D circuit' (0605), and an 'encoder' (0606) as the imaging unit, and a to' (0608) as the transmission unit. Moreover, a 'flash memory' (0607) for storing the imaged picture, and a 'UI (User Interface)' (0609) for receiving input by user's operation are comprised. The 'EEPROM' may implement the above storage means for aberration information, and the 'I/O' may implement the 'transmission means for aberration correlated with picture'. Therefore, these components are mutually connected though a data transmission path such as a 'system bus', thereby carrying out transmission and processing of the information.

The 'main memory' reads out a transmission program for transmission processing to be executed by the CPU, and simultaneously provides a work area for the program. Moreover, a plurality of addresses are assigned to the 'main memory', the 'EEPROM', and the 'flash memory', respectively, and in the program executed by the 'CPU', identification of an address and access to the address are carried out, thereby mutually exchanging data and carrying out the processing.

Here, the imaging apparatus receives an imaging instruction when the imaging button of the 'UI' is pressed, and starts imaging. At the outset, the object light, which has passed through the lens system of the 'imaging mechanism', is focused on the imaging sensor such as a CCD, and is photoelectrically-converted. Subsequently, the output signal from the imaging sensor is converted to digital picture information in the 'A/D conversion circuit'. Subsequently, this digital picture information is compressed in the 'encoder', and is stored as the imaged picture in the 'flash memory'.

However, in this imaged picture stored in the flash memory, the various aberrations such as the spherical aberration or distortion aberration are caused due to the lens property as described above. Therefore, the imaging apparatus transmits the aberration information for correcting the aberration to the picture reproducing apparatus.

At the outset, the instruction of imaging is inputted by pressing-down the imaging button of the 'UI', the above normal imaging is started, and the 'CPU' outputs an instruction to read the aberration information such as the major diameter and distortion rate of the lens, which have been preliminarily stored at the address 1 in the 'EEPROM', to the address 1 in the 'main memory' in accordance with the transmission program loaded by the 'main memory'. In addition, in cases where the imaging apparatus has a configuration to mount a telephoto lens or other lens system, aberration information indicating lens property of the telephoto lens mounted thereon may be newly acquired from the telephoto lens itself or from network, thereby being stored at the address 1 in the 'main memory'.

Subsequently, the 'CPU' outputs an instruction to convert the aberration information such as the major diameter and distortion rate of the lens, which have been stored at the address 1 in the 'main memory', to tag data in Exif, for example. After that, an instruction to add tag data indicating the aberration information to the imaged picture stored at the address 1 in the 'flash memory' is outputted.

The imaged picture including the aberration information as tag data thus generated is modulated to infrared pulse signal in accordance with an instruction by the 'CPU', and is transmitted from the infrared port as one of the 'I/O' to the picture printing apparatus such as a HDD recorder or to the picture printing apparatus such as a printer via infrared communication.

In addition, in the picture printing apparatus or the picture printing apparatus, the transmitted aberration of the imaged picture is corrected, for example, by utilizing the correction function or a correction table, in which the aberration information such as the major diameter and distortion rate of the lens are used as parameters.

### <Processing Flow>

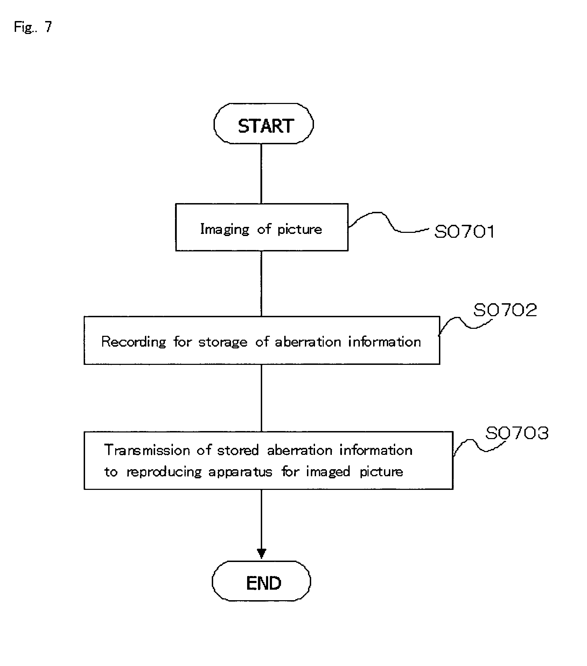

Fig. 7 is a flowchart of processing in the imaging apparatus of the first embodiment. Note that, the following steps may be processing steps of the program, which is to be stored in a medium and is for controlling a computer. As show in Fig. 7, at the outset, a picture is imaged (step S0701). The aberration information is recorded to be stored (step S0702). Inevitably, the recording of the aberration information may be carried out before imaging the picture. Moreover, this recorded and stored aberration information may be one or more than one of the physical constant of the lens system, the identification information of the lens system, the identification information of the imaging unit, or the identification information of the imaging apparatus itself, for example.

Subsequently, the stored aberration information is transmitted to the reproducing apparatus for the imaged picture (step S0703). In addition, the aberration information correlated with the imaged picture may be transmitted, for example, the aberration information may be added to the image picture as tag data. Moreover, the picture printing apparatus, as an alternative to the picture reproducing apparatus, may be set as the transmission destination of the aberration information.

### <Brief Description of Effects of First Embodiment>

As described above, according to the imaging apparatus of the first embodiment, it is possible to transmit the aberration information for aberration correction to the picture reproducing apparatus or to the picture printing apparatus, which has the high processing ability or the large capacity for storing data. Accordingly, it is possible to cause the picture reproducing apparatus or the picture printing apparatus to execute the aberration correction processing, so that it is unnecessary to provide the imaging apparatus itself with high processing capability. Moreover, it is possible to cause a picture reproducing apparatus to store the aberration data having a large data amount, thereby carrying out advanced aberration correction processing. Furthermore, it is possible to appropriately correct the reproduced picture or the printed picture, which is to be finally provided to a user, according to the property of the circuit of the apparatus.

Moreover, the picture data transmitted as a target of the aberration correction is imaged by the digital imaging sensor such as CCD or CMOS, and for example, the portion, in which brightness has decreased due to the aberration, still retains its tone acquirable for the imaging sensor, so that it is possible to carry out aberration correction with high reproducibility. Furthermore, in cases where the imaging apparatus, which has already transmitted the aberration information, is reconnected, the aberration information transmitted then may be stored in the storage in the picture reproducing apparatus or the picture printing apparatus, thereby reducing the amount of the data to be transmitted.

### <<Second embodiment>>

### <Concept of Second Embodiment>

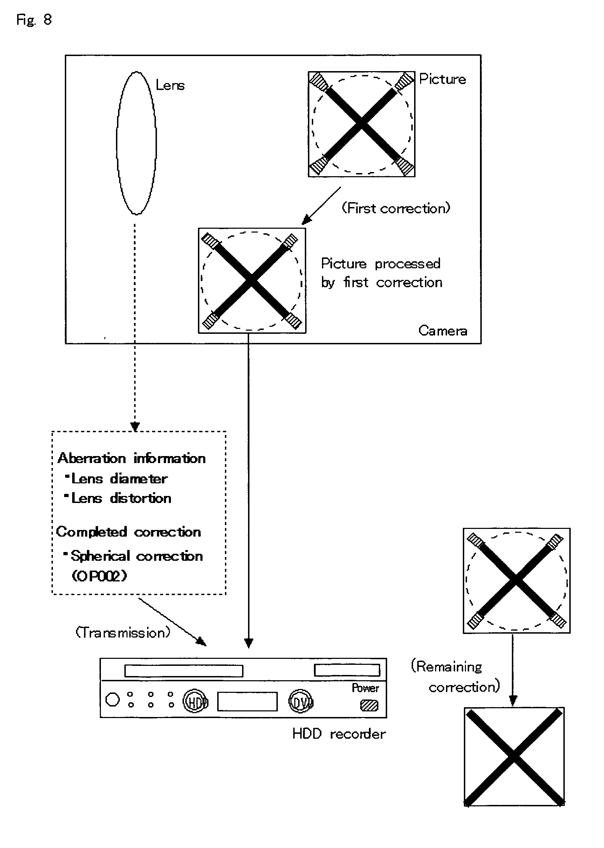

Fig. 8 is a schematic diagram showing an example of aberration correction of a picture imaged by an imaging apparatus (a camera) of a second embodiment. As shown in Fig. 8, in the picture of the character 'X' imaged by the imaging apparatus, aberration occurs. The imaging apparatus of the second embodiment carries out simple correction, for example, only correction of distortion aberration in the shaded portion as a first correction by itself. After that, tag data is added to the picture processed by the first correction, and the picture with tag data is transmitted to the picture reproducing apparatus such as the HDD recorder.

Therefore, the imaging apparatus of the second embodiment transmits identification information indicating status of the correction carried out by the imaging apparatus itself with the aberration information, so that the remaining correction, for example, the picture reproducing apparatus in this case carries out correction of the spherical aberration. Thus, the imaging apparatus and the picture reproducing apparatus share in the aberration correction, thereby efficiently utilizing the information processing resources.

### <Functional Configuration>

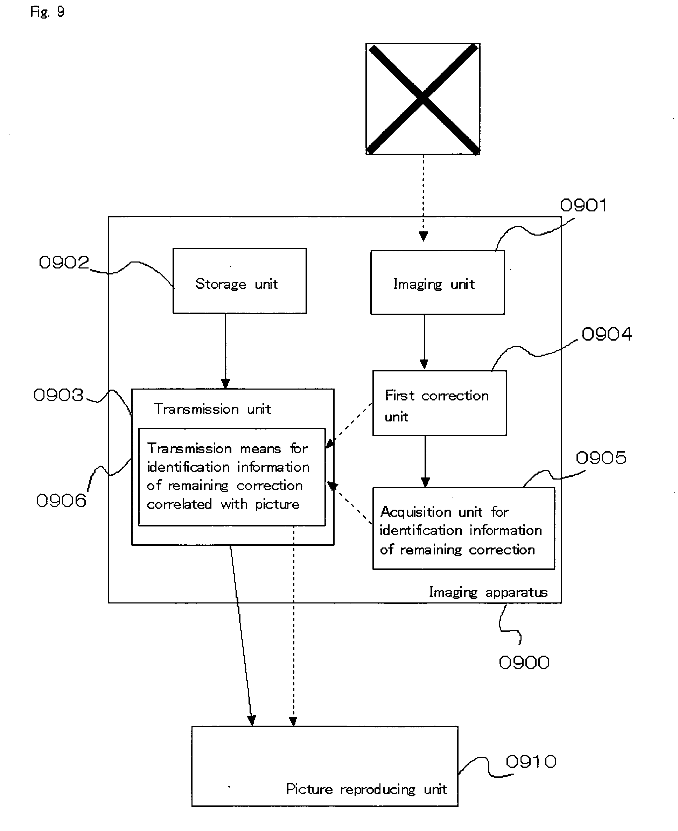

Fig. 9 is a functional block diagram showing an example of the imaging apparatus of the second embodiment. As shown in Fig. 2, the imaging apparatus of the second embodiment is based on the first embodiment, and comprises an 'imaging unit' (0901), a 'storage unit' (0902), and a 'transmission unit' (0903). Note that, the 'imaging unit', the 'storage unit' (0902), and the 'transmission unit' have been described, so that the descriptions thereof have been omitted.

The imaging apparatus of the second embodiment further comprises a 'first correction unit' (0904), and an 'acquisition unit for identification information of remaining correction' (0905), and the transmission unit comprises a 'transmission means for identification information of remaining correction correlated with picture' (0906).

The 'first correction unit' (0904) has a function of carrying out a first correction. The 'first correction' corresponds to a portion of correction based on the aberration information of the imaged picture. For example, in cases where the 'distortion aberration', the 'spherical aberration, and the 'astigmatism' of the imaged picture are corrected, a combination of one or more than two of the three aberration corrections corresponds to the first correction.

The picture reproducing apparatus or a picture printing apparatus, which has the high processing capability and the large data storage capacity, executes correction processing. Therefore, it is preferable that the first correction carried out by the imaging apparatus be an aberration correction, which does not require the high processing capability nor a large data storage capacity.

The 'acquisition unit for identification information of remaining correction' (0905) has a function of acquiring identification information of remaining correction. The 'identification information of remaining correction' indicates a second correction, which is the remaining portion of the correction. In cases where the aberration correction to the imaged picture include corrections to the three aberrations as the 'distortion aberration', the 'spherical aberration, and the 'astigmatism', and the correction of the 'distortion aberration' is carried out as the first correction, the corrections to the 'spherical aberration and the 'astigmatism' are identified as the second correction by this identification information of remaining correction.

As a method for acquiring the identification information of remaining correction, for example, the identification information of the aberration correction, which has not been carried out, is extracted and acquired from a data table preliminarily including all identification information of aberration corrections to be carried out. Note that, it is necessary that the identification information of remaining correction is identification information understandable for the picture reproducing apparatus or the picture printing apparatus, which actually carries out the correction. Specifically, an application used for interpretation of the identification information of remaining correction is installed to the picture reproducing apparatus or the picture printing apparatus, so that the picture reproducing apparatus or the picture printing apparatus can understand the identification information.

The 'transmission means for identification information of remaining correction correlated with picture' has a function of transmitting the identification information of remaining correction correlated with the picture after the first correction. In cases where the transmission unit comprises the transmission means for aberration correlated with picture, the identification information of remaining correction correlated with the picture, to which the aberration information has been added, may be transmitted. The correlation between the identification information of remaining correction and the picture may be carried out, for example, similar to the aberration information, by adding the identification information of remaining correction as tag data to the picture.

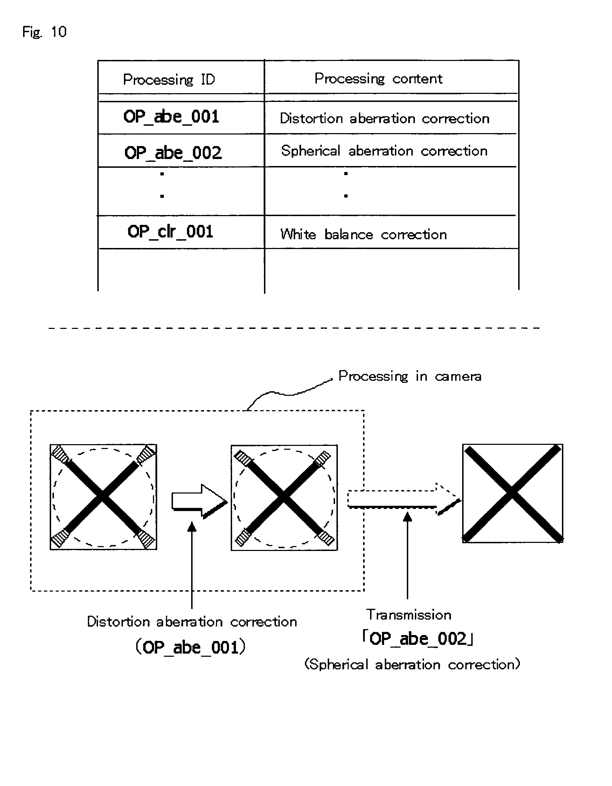

Fig. 10 is a conceptual diagram showing an example of acquisition processing of identification information of remaining correction and transmission processing of the identification information of remaining correction correlated with the picture. As shown in Fig. 10, a table indicates aberration corrections to be carried out to the imaged picture, and all other corrections. In cases where the distortion aberration correction ('OP_abe_001') is carried out as the first correction in the imaging apparatus of the second embodiment, the identification information of remaining correction 'OP_abe_002' is acquired from this table and is transmitted.

Moreover, a configuration, in which the picture reproducing apparatus or the picture printing apparatus stores the correction table indicating corrections to be carried out as shown in Fig. 10, and the imaging apparatus transmits 'identification information of executed correction' ('OP_abe_001' in the above case), provides the same effect.

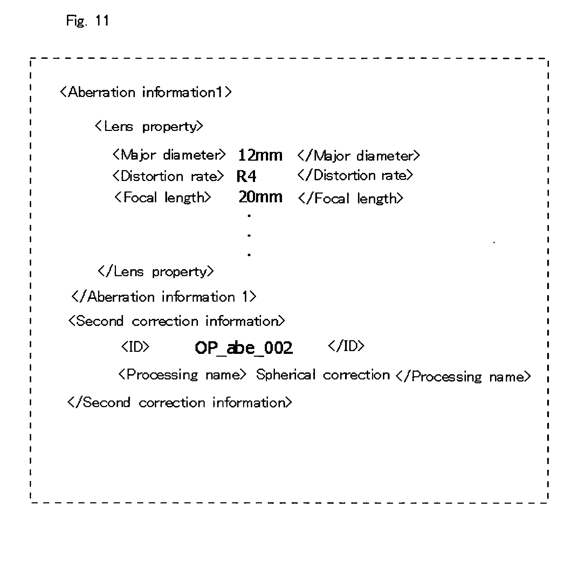

Fig. 11 is a diagram showing an example of tag data of the picture transmitted from transmission means for identification information of remaining correction. As shown in Fig. 11, a physical constant indicating the 'lens property' as the aberration information is acquired from tag data added to the picture.

In addition to this aberration information, as the second correction information (identification information of remaining correction), the identification information 'OP_abe_002' indicating correction of the 'spherical aberration', which has not been corrected by the imaging apparatus, is indicated by tag data.

### <Hardware Configuration>

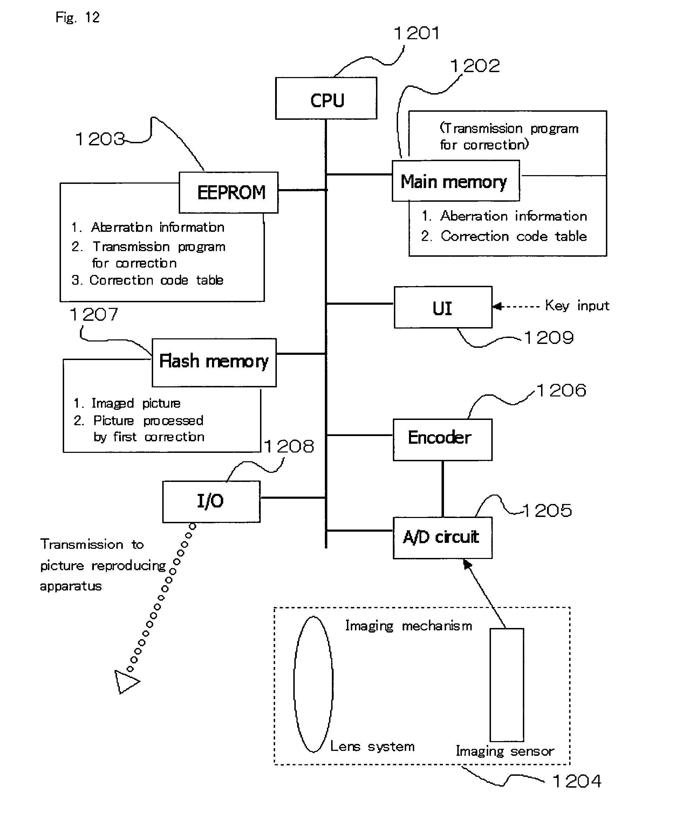

Fig. 12 is a schematic diagram showing an example of hardware configuration of the picture reproducing apparatus of the second embodiment in cases where the above-mentioned functional configuration is implemented as hardware The processing of the respective hardware components in transmission of the identification information of remaining correction to the picture reproducing apparatus will be described with reference to Fig. 12. As shown in Fig. 12, the imaging apparatus comprises a 'CPU' (1201), a 'main memory' (1202), a 'EEPROM' (1203), an 'imaging mechanism' (1204), an 'A/D circuit' (1205), and an 'encoder' (1206), a 'I/O' (1208), a 'flash memory' (1207), and a 'UI (User Interface)' (1209).

As described above, the normal imaging is started when the imaging button of the 'UI' is pressed, and imaged picture is store at the address 1 in the 'flash memory'. In addition, simultaneously, as described above, the addition of the aberration information as tag data to the imaged picture is carried out.

Moreover, in the second embodiment, since the imaging apparatus carries out the first correction, the transmission program for correction is loaded from the address 2 in the 'EEPROM' to the 'main memory'. The 'CPU' reads the aberration information necessary for the first correction from the 'EEPROM', and carries out the first correction to the imaged picture by utilizing the aberration information as correction parameters, for example, the distortion aberration correction in this case, according to the transmission program for correction. After that, the picture processed by the first correction is stored at the address 2 in the 'flash memory'.

Subsequently, in order to acquire the identification information of remaining correction, the 'CPU' reads the correction code table as shown in Fig. 10, which has been stored in the address 3 in the 'EEPROM', to the address 2 in the 'main memory'. After that, the identification information 'OP_abe_002', indicating aberration correction other than the first correction, is acquired.

Subsequently, similar to the above-mentioned aberration information, the identification information of remaining correction is converted, for example, to tag data in Exif, and tag data is added to the picture processed by the first correction stored at the address 2 in the 'flash memory'. The imaged picture including the aberration information or the identification information of remaining correction as tag data thus generated is modulated to infrared pulse signal in accordance with an instruction by the 'CPU', and is transmitted from the infrared port as one of the 'I/O' to the picture printing apparatus such as a HDD recorder or to the picture printing apparatus such as a printer via infrared communication.

Subsequently, in the picture reproducing apparatus or the picture printing apparatus, the second correction to the transmitted picture processed by the first correction is carried out based on the identification information of remaining correction.

### <Processing Flow>

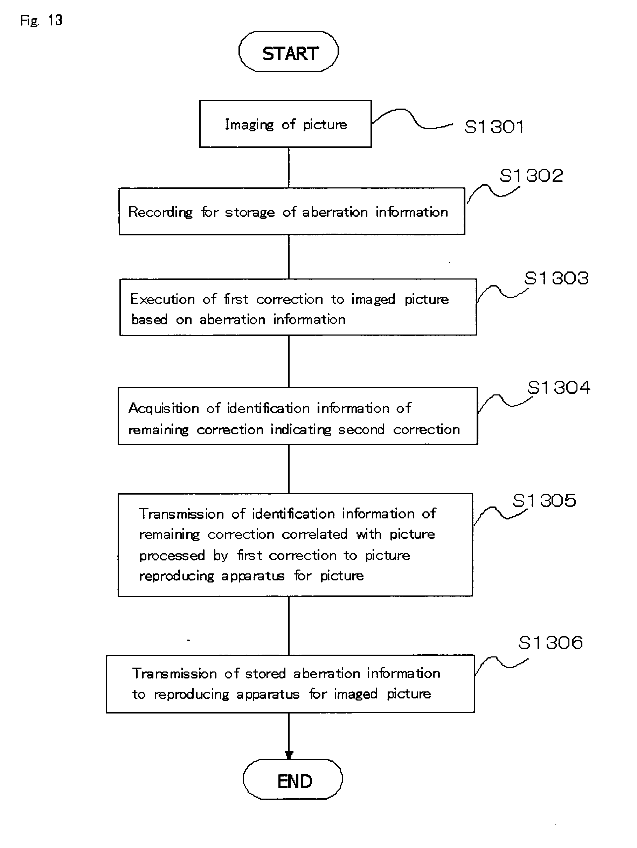

Fig. 13 is a flowchart of processing in the imaging apparatus of the second embodiment. Note that, the following steps may be processing steps configuring the program, which is to be stored in a medium and is for controlling a computer. As show in Fig. 13, at the outset, a picture is imaged (step S1301). The aberration information is recorded to be stored (step S1302).

Subsequently, based on the aberration information, the first correction to the imaged picture is carried out (step S1303). Subsequently, the identification information of remaining correction indicating the second correction is acquired (step S1304). Subsequently, the identification information of remaining correction correlated with the picture processed by the first correction is transmitted to the picture reproducing apparatus for the picture (step S1305), and the stored aberration information is transmitted to the picture reproducing apparatus for the picture (step S1306). Moreover, the picture printing apparatus, instead of the picture reproducing apparatus, may be set as the transmission destination of the aberration information.

### <Brief Description of Effects of Second Embodiment>

According to the imaging apparatus of the second embodiment, the imaging apparatus and the picture reproducing apparatus can share the aberration correction of the imaged picture, thereby efficiently utilizing the information processing resource.

### <<Third embodiment>>

### <Concept of Third Embodiment>

In a third embodiment, the picture reproducing apparatus acquires the imaged picture and the aberration information, transmitted from the imaging apparatus of the above embodiments, thereby carrying out the aberration correction.

### <Functional Configuration>

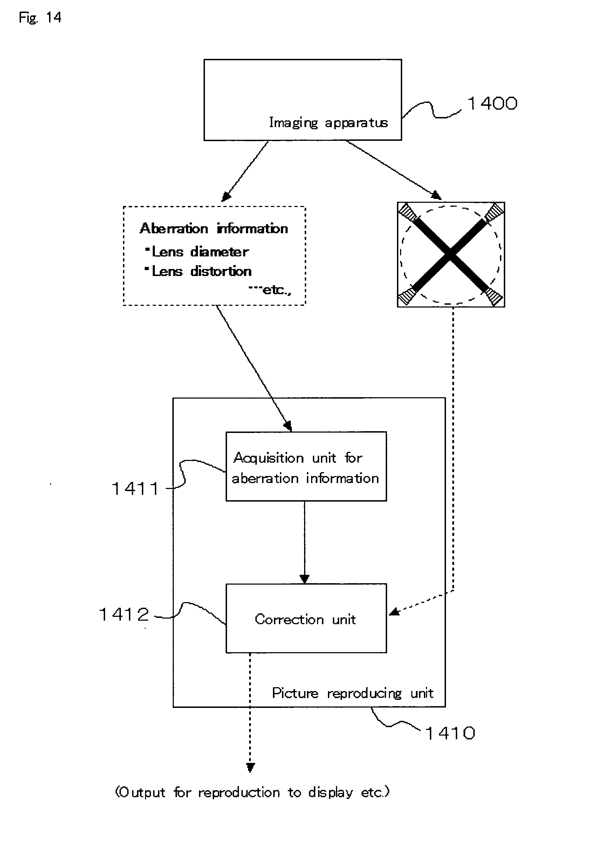

Fig. 14 is a functional block diagram showing an example of a reproducing apparatus of the third embodiment. As shown in Fig. 14, the 'reproducing apparatus' (1410) of the third embodiment comprises an 'acquisition unit for aberration information' (1411), and a 'correction unit' (1412). The 'acquisition unit for aberration information' (1411) has a function of acquiring aberration information from the imaging apparatus (1400) of the above embodiment. The acquisition unit for aberration information can be implemented through the infrared reception port when the aberration information is transmitted from the imaging apparatus through the infrared communication. In addition, the acquisition unit for aberration information may be implemented through other wireless communication port or the network connection circuit in accordance with transmission format of the aberration information.

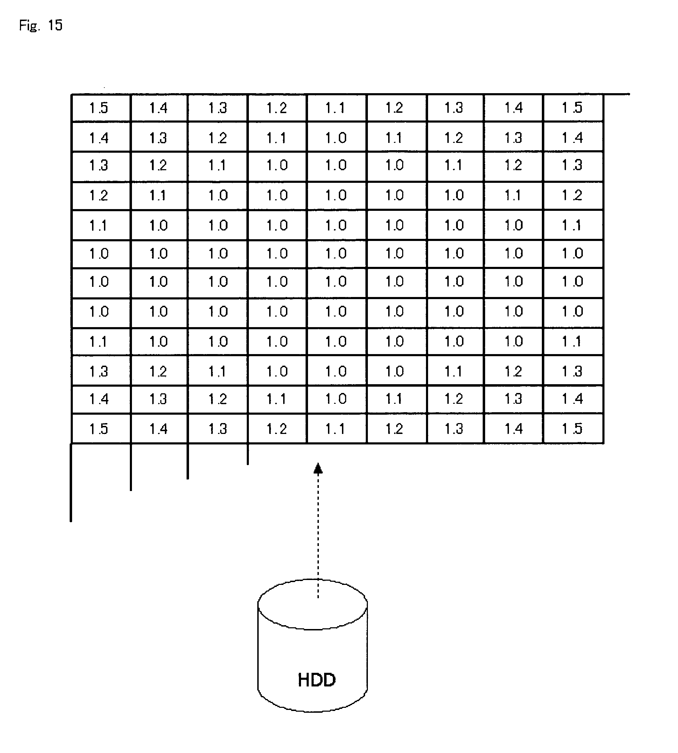

The 'correction unit' (1412) has a function of carrying out correction of the picture acquired from said imaging apparatus (1400) based on the acquired aberration information. Fig. 15 is a diagram showing an example of correction data used for correction processing in a correction unit of the picture reproducing apparatus of the third embodiment.

In Fig. 15, each block corresponds to each pixel of the picture, and multiplication of a value in the block by brightness value of a pixel corresponding to the block is calculated, so that brightness in the peripheral portion of the picture, which has been decreased due to the spherical aberration, is corrected.

It is necessary to prepare the correction data according to various aberration information such as correction data for the picture having the aberration information 'distortion rate R45 and focal length 30-50mm' in addition to the correction data for the picture having the aberration information 'distortion rate R45 and focal length less than 30mm' in Fig. 15. Therefore, it is preferable that the correction, which requires large storage capacity and high processing ability, be carried out by the picture reproducing apparatus of the present invention, comprising the large capacity storage means such as HDD.

Note that the above-mentioned correction is an example, and the picture reproducing apparatus may carry out various corrections such as a correction utilizing correction function for other various aberrations. Moreover, based on the second embodiment, in cases where the picture acquired from the imaging apparatus is the picture processed by the first correction, the second correction may be carried out based on the identification information of remaining correction.

### <Hardware Configuration>

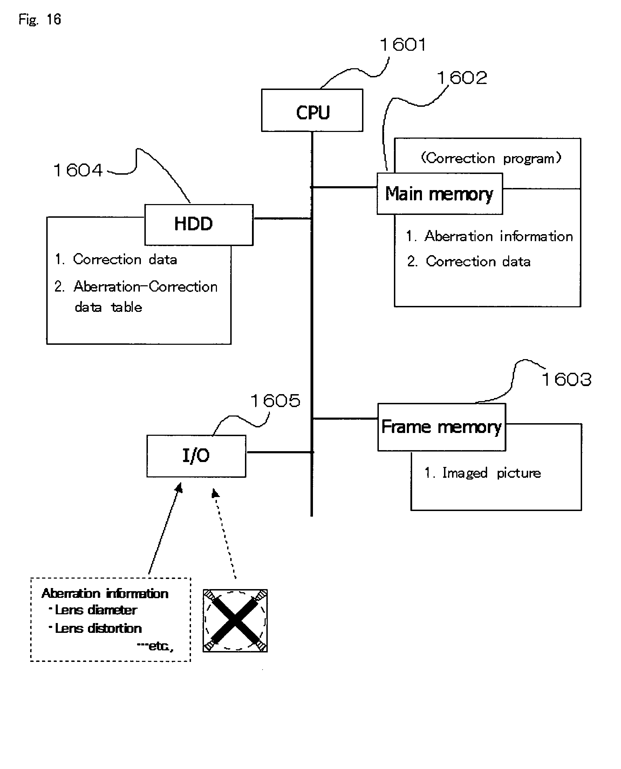

Fig. 16 is a schematic diagram showing an example of hardware configuration of the picture reproducing apparatus of the third embodiment in cases where the above-mentioned functional configuration is implemented as hardware. The processing of the respective hardware components in processing of the aberration correction will be described with reference to Fig. 16. As shown in Fig. 16, the picture reproducing apparatus carries out various calculations, and comprises a 'CPU' (1601), a 'main memory' (1602). In addition, a 'I/O' (1605) as the acquisition unit for aberration information is comprised. In addition, a 'frame memory' (1603) for loading the imaged picture to carry out the correction, and a 'HDD' (1604), which is for storing the correction data and the program, and is for storing the corrected picture, are comprised. Therefore, these components are mutually connected through the data communication path such as the 'system bus', thereby carrying out transmission/reception or processing of the information.

Here, when receiving the infrared pulse indicating the imaged picture with the aberration information transmitted from the imaging apparatus through the 'I/O' such as an infrared port, the aberration correction is automatically started due to the reception as a trigger, or is started due to an operation of the 'UI' after that (not indicated).

At the outset, the infrared pulse received by the 'I/O' is demodulated to picture data, and is stored in the 'frame memory'. In addition, the aberration information as tag data added to the demodulated picture data is loaded, and is stored at the address 1 in the 'main memory'. After that, in accordance with the correction program loaded to the 'main memory', the 'CPU' acquires the correction data corresponding to the aberration information stored at the address 1 in the 'main memory' with reference to the 'aberration-correction data table' stored at the address 2 in the 'HDD'. Subsequently, the acquired correction data is stored at the address 2 in the 'main memory'.

Subsequently, the aberration correction to the imaged picture stored in the 'frame memory' is carried out by utilizing the stored correction data.

### <Processing Flow>

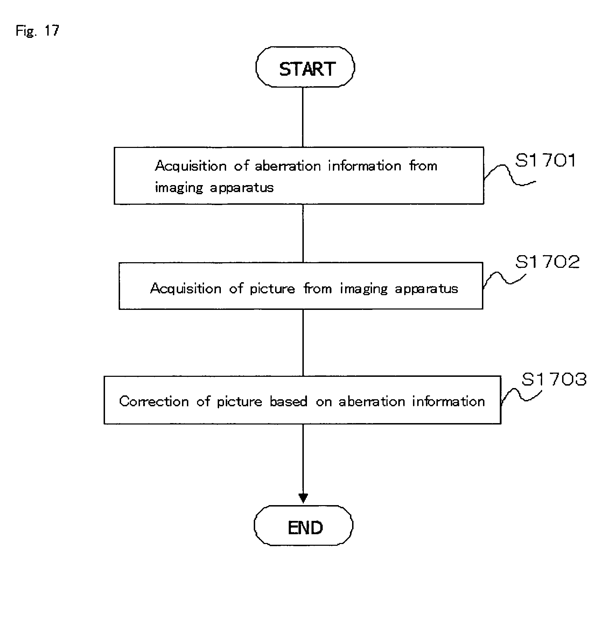

Fig. 17 is a flowchart of processing in the picture reproducing apparatus of the third embodiment. Note that, the following steps may be processing steps in the program, which is to be stored in a medium and is for controlling a computer. As show in Fig. 17, at the outset, the aberration information is acquired from the imaging apparatus (step S 170 1). In addition, the picture is acquired from the imaging apparatus (step S1702). The order of these acquisitions of the aberration information and the picture may be reversed, or in cases where the aberration information as tag data is added to the picture, the acquisition thereof may be simultaneously carried out. After that, the picture is corrected based on the aberration information (step S 1703).

### <Brief Description of Effects of Third Embodiment>

As described above, according to the picture reproducing apparatus of the third embodiment, it is possible to carry out the correction in the picture reproducing apparatus having the high processing ability and large data storage capacity. Moreover, the correction data having large amount of data is stored in the picture reproducing apparatus, thereby carrying out more advanced aberration correction.

Note that, in the above embodiment, picture reproducing apparatus comprising the 'acquisition unit for aberration correction' and the 'correction unit' has been described. As described above, the transmission destination of the picture and the aberration information by the transmission unit may be the picture printing apparatus. Note that, the picture printing apparatus has the same configuration, in which the 'acquisition unit for aberration correction' and the 'correction unit' are comprised, as that of the reproducing apparatus excluding general printing function for printing the picture in place of the picture reproducing function, so that detailed description of the picture printing apparatus has been omitted.

In addition, the picture correction method of the picture reproducing apparatus and the picture correction method of the picture printing apparatus are the same excluding the difference that the picture is finally output to the display or is finally printed on paper, so that detailed description of the picture printing method of the picture printing apparatus has been omitted.

### <<Fourth embodiment>>

### <Concept of Fourth Embodiment>

A picture reproducing apparatus of a fourth embodiment is based on that of the third embodiment, and is different in acquisition of the aberration information. In the fourth embodiment, the picture reproducing apparatus acquires the aberration information as the identification information of the lens, and separately acquires the physical constants such as major diameter and distortion rate of the lens as the aberration information from the data server via the communication, without directly acquiring the physical constants.

### <Functional Configuration>

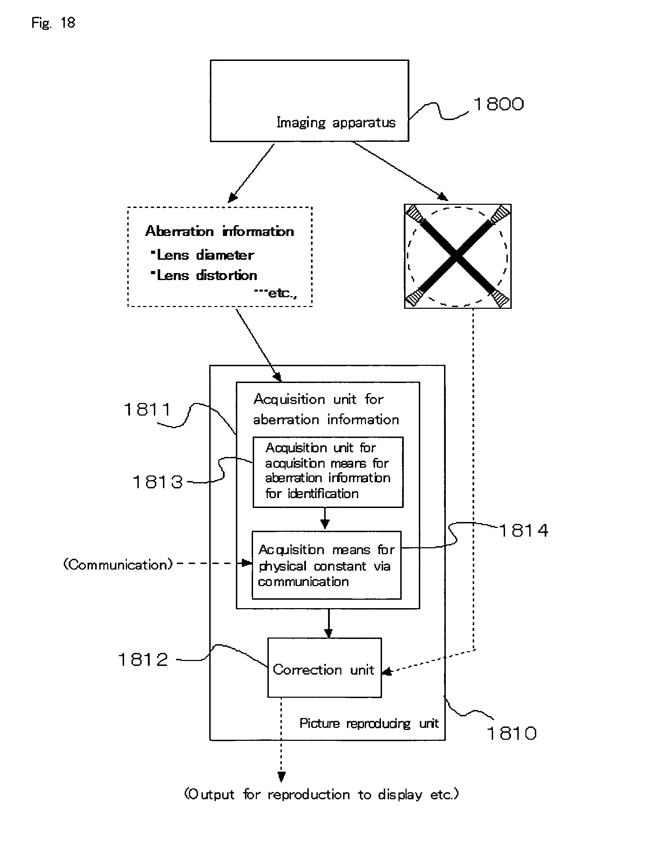

Fig. 18 is a functional block diagram showing another example of the picture reproducing apparatus of a fourth embodiment. The 'picture reproducing apparatus' (1810) of a fourth embodiment is based on the first embodiment, and comprises an 'acquisition unit for aberration information' (1811), and a 'correction unit' (1812). Note that, the 'acquisition unit for aberration information', and the 'correction unit' have been described in the above embodiment, so that descriptions have been omitted.

In the picture reproducing apparatus of a fourth embodiment, the acquisition unit for aberration information comprises an 'acquisition means for aberration information for identification' (1813), and an 'acquisition means for physical constant via communication' (1814).

The 'acquisition means for aberration information for identification' (1813) has a function of acquiring the aberration information as the identification information. The 'aberration information as the identification information' corresponds to the identification information of lens system, the identification information of imaging unit, and the identification information of imaging apparatus itself. However, as described above, the above identification information of the lens system such as a model number of the lens or camera, the identification information of the imaging unit, or the identification information of the imaging apparatus itself cannot be used for calculating the aberration and be used as a correction parameter. Therefore, in the fourth embodiment, it is possible to acquire the physical constant of the lens identified by the identification information, for example, from the data server on the network via communication by utilizing the identification information as a key, thereby carrying out the correction.

The 'acquisition means for physical constant via communication' (1814) has a function of acquiring the physical constant of the lens system identified by the acquired aberration information for identification via communication. Thus, the picture reproducing apparatus can acquire the physical constant of the lens system, which can be used as the correction parameter, based on the identification information, which cannot be used as the correction parameter, via the communication.

### <Hardware Configuration>

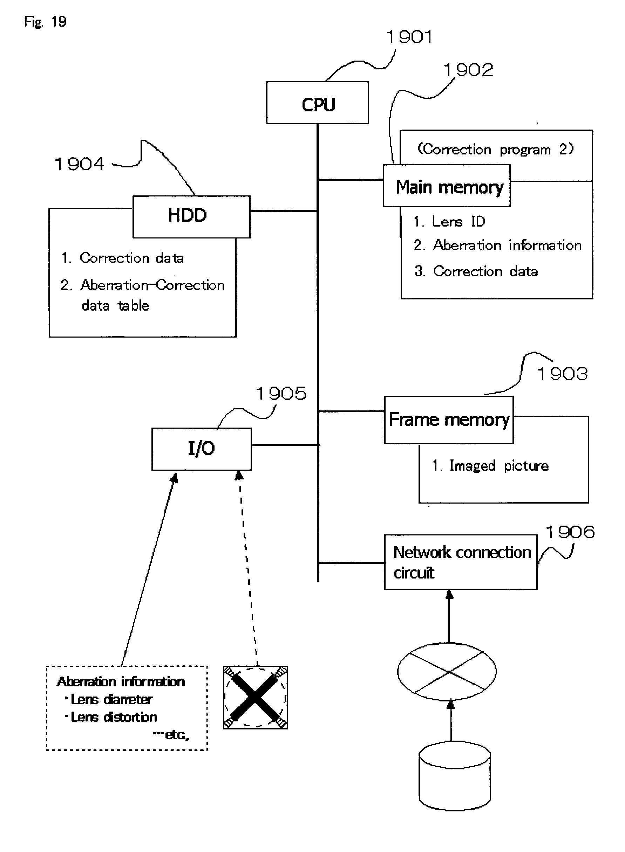

Fig. 19 is a schematic diagram showing an example of hardware configuration of the picture reproducing apparatus of the fourth embodiment in cases where the above-mentioned functional configuration is implemented as hardware. The processing of the respective hardware components in processing of the aberration correction will be described with reference to Fig. 19. As shown in Fig. 19, the picture reproducing apparatus comprises a 'CPU' (1901), a 'main memory' (1902), an 'I/O' (1905), a 'frame memory' (1903), and a 'HDD' (1904). In addition, a 'network connection circuit' (1906) is comprised as the acquisition means for physical constant via communication.

Here, when receiving the infrared pulse indicating the imaged picture with the aberration information transmitted from the imaging apparatus through the 'I/O' such as an infrared port, as described above, the demodulation of the imaged picture and the aberration information, and the storage of them to the 'frame memory' and the 'main memory' are carried out.

Subsequently, in cases where the aberration information stored at the address 1 in the 'main memory' is, for example, the identification information such as the lens ID, the picture reproducing apparatus of the fourth embodiment starts the following processing to acquire the physical constant via the communication. Therefore, the 'CPU' accesses to a predetermined data server on the network via the 'network connection circuit' according to the correction program 2 loaded to the 'main memory'. This data server includes a data base having a table, in which the physical constant of lens is determined according to lens type or camera type. The 'CPU' transmits a search request using the lens ID stored at the address 1 in the 'main memory' as a key to the data server. The physical constant of the lens returned as a result of the search is stored as the aberration information at the address 2 in the 'main memory'.

Subsequently, as described above, the correction data is acquired from the 'HDD' by utilizing the physical constant, or the physical constant is utilized as correction parameter for the correction function, thereby carrying out the correction to the imaged picture loaded to the 'frame memory'.

### <Processing Flow>

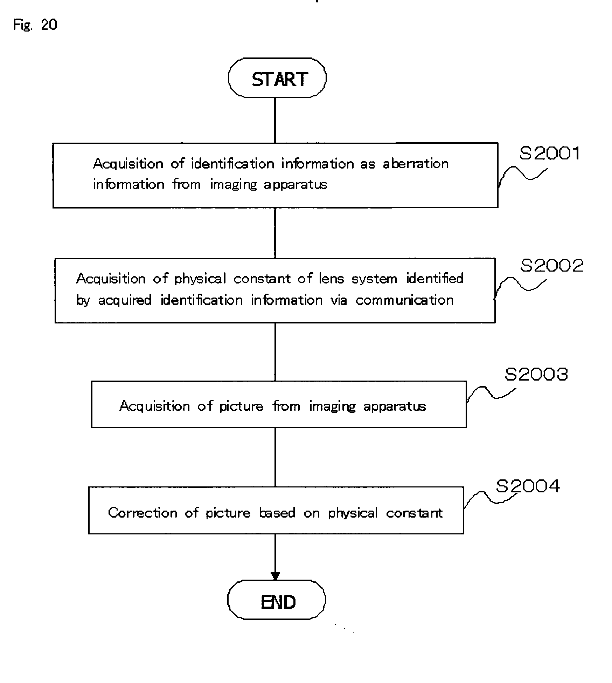

Fig. 20 is a flowchart of processing in the picture reproducing apparatus of the fourth embodiment. Note that, the following steps may be processing steps configuring the program, which is to be stored in a medium and is for controlling a computer. As show in Fig. 20, at the outset, the identification information as the aberration information is acquired from the imaging apparatus (step S2001). Subsequently, the physical constant of the lens system identified by the acquired aberration information for identification is acquired via communication (step S2002). Moreover, the picture is acquired from the imaging apparatus (step S2003). Subsequently, the picture is corrected based on the physical constant (step S2004).

### <Brief Description of Effects of Fourth Embodiment>

According to the picture reproducing apparatus of the fourth embodiment, it is possible to acquire the physical constants necessary for the aberration correction from the server via the communication without acquiring the physical constant directly from the imaging apparatus. Moreover, in cases where the physical constant is updated to more accurate information, the provision of information is carried out via the communication as described in the fourth embodiment, so that it is possible to utilize the latest physical constant regarding the aberration correction in the picture reproducing apparatus.

Note that, the picture reproducing apparatus and the picture reproducing method thereof in the fourth embodiment may be utilized for the picture printing apparatus having the same configuration, and the picture printing method thereof.

### Description of Reference Numerals

0200 Imaging apparatus
0201 Imaging unit
0202 Storage unit
0203 Transmission unit
1410 Picture reproducing apparatus
1411 Acquisition unit for aberration information
1412 Correction unit

## Claims

1. An imaging apparatus, comprising:
an imaging unit for imaging a picture;
a storage unit for storing aberration information, which indicates an aberration of a lens of the imaging unit; and
a transmission unit for transmitting the stored aberration information to a reproducing apparatus for the imaged picture.

2. The imaging apparatus according to Claim 1,
wherein the transmission unit comprises transmission means for aberration correlated with picture, which transmits the aberration information correlated with the imaged picture.

3. The imaging apparatus according to Claim 1 or 2,
wherein the storage unit comprises storage means for aberration information, which stores one or more than one of a physical constant of a lens system, identification information of the lens system, identification information of the imaging unit, or identification information of the imaging apparatus itself.

4. The imaging apparatus according to any one of Claims 1 to 3, further comprising:
a first correction unit for carrying out a first correction, which is a portion of correction based on the aberration information of the imaged picture; and
an acquisition unit for identification information of remaining correction, which acquires identification information of remaining correction, indicating a second correction, which is the remaining portion of the correction,
wherein the transmission unit comprises transmission means for identification information of remaining correction correlated with picture, which transmits the identification information of remaining correction correlated with the picture after the first correction.

5. The imaging apparatus according to any one of Claims 1 to 4,
wherein the transmission unit transmits the aberration information to a printing apparatus not to the reproducing apparatus.

6. A picture reproducing apparatus, comprising:
an acquisition unit for aberration information, which acquires aberration information from the imaging apparatus according to any one of Claims 1 to 4; and
a correction unit, which carries out correction of the picture acquired from said imaging apparatus based on the acquired aberration information.

7. The picture reproducing apparatus according to Claim 6,
wherein the acquisition unit for aberration information comprises acquisition means for aberration information for identification, which acquires the aberration information as the identification information, and acquisition means for physical constant via communication, which acquires the physical constant of the lens system.

8. A picture printing apparatus, comprising:
an acquisition unit for aberration information, which acquires aberration information from the imaging apparatus according to Claim 5; and
a correction unit, which carries out correction of the picture acquired from said imaging apparatus based on the acquired aberration information.

9. The picture printing apparatus according to Claim 8,
wherein the acquisition unit for aberration information comprises acquisition means for aberration information for identification, which acquires the aberration information as the identification information, and acquisition means for physical constant via communication, which acquires the physical constant of the lens system.

10. A controlling method for an imaging apparatus to cause a computer to execute the steps of:
imaging a picture;
recording and storing aberration information, which indicates an aberration of a lens used for imaging; and
transmitting the stored aberration information to a reproducing apparatus for the imaged picture.

11. The controlling method for the imaging apparatus according to Claim 10,
wherein the step of transmission comprises a step of transmitting aberration correlated with picture, which transmits the aberration information correlated with the imaged picture.

12. The controlling method for the imaging apparatus according to Claim 10 or 11,
wherein the step of recording and storing comprises a step of recording and storing aberration information, which records and stores one or more than one of a physical constant of a lens system, identification information of the lens system, identification information of the imaging unit, or identification information of the imaging apparatus itself.

13. The controlling method for the imaging apparatus according to any one of Claims 10 to 12, further comprising the steps of:
carrying out a first correction, which is a portion of correction based on the aberration information of the imaged picture; and
acquiring identification information of remaining correction, which acquires identification information of remaining correction, indicating a second correction, which is the remaining portion of the correction,
wherein the step of transmitting comprises a step of transmitting identification information of remaining correction correlated with picture, which transmits the identification information of remaining correction correlated with the picture after the first correction.

14. The controlling method for the imaging apparatus according to any one of Claims 10 to 13,
wherein the step of transmitting transmits the aberration information to a printing apparatus instead of to the reproducing apparatus.

15. A picture correcting method for a picture reproducing apparatus to cause a computer to execute the steps of:
acquiring aberration information, which acquires aberration information from the imaging apparatus by the controlling method for an imaging apparatus according to any one of Claims 10 to 13; and
correcting, which carries out correction of the picture acquired from said imaging apparatus based on the acquired aberration information.

16. The picture correcting method for the picture reproducing apparatus according to Claim 15,
wherein the step of acquiring aberration information comprises the steps of acquiring aberration information for identification, which acquires the aberration information as the identification information, and acquiring physical constant via communication, which acquires the physical constant of the lens system identified by the acquired aberration information for identification via communication.

17. A picture correcting method for a picture printing apparatus to cause a computer to execute the steps of:
acquiring aberration information, which acquires aberration information from the imaging apparatus by the controlling method for an imaging apparatus according to Claim 14; and
correcting, which carries out correction of the picture acquired from said imaging apparatus based on the acquired aberration information.

18. The picture correcting method for the picture printing apparatus according to Claim 17,
wherein the step of acquiring aberration information comprises the steps of acquiring aberration information for identification, which acquires the aberration information as the identification information, and acquiring physical constant via communication, which acquires the physical constant of the lens system identified by the acquired aberration information for identification via communication.
